# EUROPÄISCHE PATENTSCHRIFT

(11) **EP 1 163 716 B1**
(45) Veröffentlichungstag und Bekanntmachung des Hinweises auf die Patenterteilung: **22.08.2007**
(21) Anmeldenummer: 01911338.0
(22) Anmeldetag: 11.01.2001
(51) Int. Cl.: H02P 27/16, B23B 45/02, B25B 21/00, B25B 21/02

(54) **STEUERELEKTRONIK FÜR EIN ELEKTROHANDWERKZEUG**
ELECTRONIC CONTROLLER FOR AN ELECTRIC HAND TOOL
SYSTEME ELECTRONIQUE DE COMMANDE POUR OUTIL ELECTRIQUE MANUEL

(30) Priorität: 25.01.2000 DE 10002922
(43) Veröffentlichungstag der Anmeldung: 19.12.2001
(73) Patentinhaber: Metabowerke GmbH, 72622 Nürtingen (DE)
(72) Erfinder: ROTTMERHUSEN, HANS HERMANN, 25782 Tellingstedt (DE)
(74) Vertreter: Elbertzhagen, Otto
(86) Internationale Anmeldenummer: PCT/DE2001/000082
(87) Internationale Veröffentlichungsnummer: WO 2001/056144

(56) Entgegenhaltungen:
- EP-A- 0 180 860
- WO-A-99/27642
- DE-A- 19 851 479
- US-A- 5 038 084
- US-A- 5 105 130
- US-A- 5 731 673
- US-A- 5 856 731
- US-A- 5 889 922

## Beschreibung

Die Erfindung bezieht sich auf eine Steuerelektronik für ein Elektrohandwerkzeug, gemäß dem Patentanspruch 1.

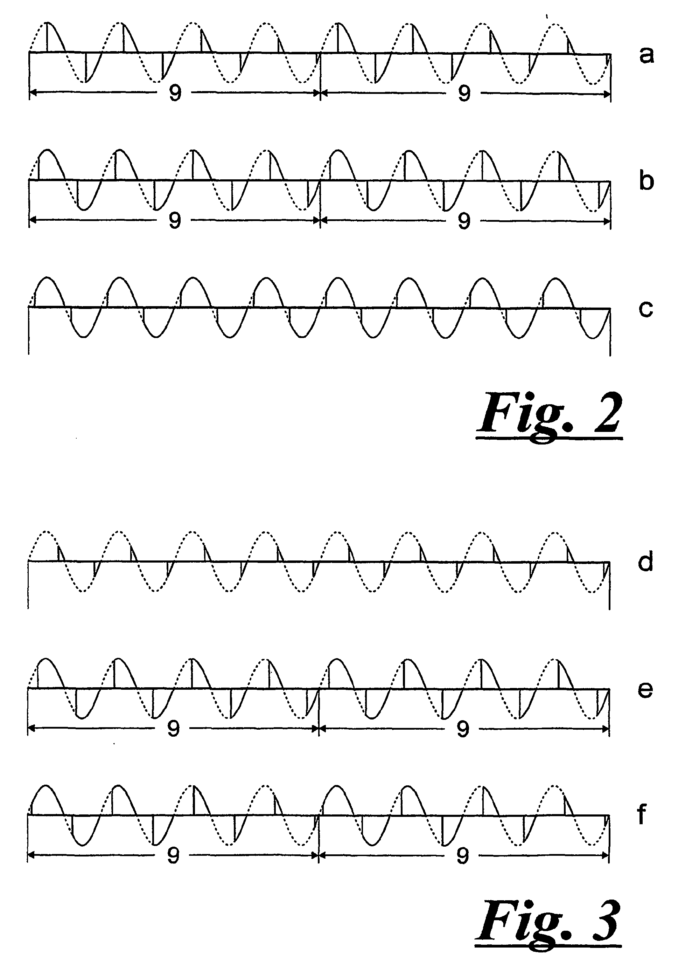

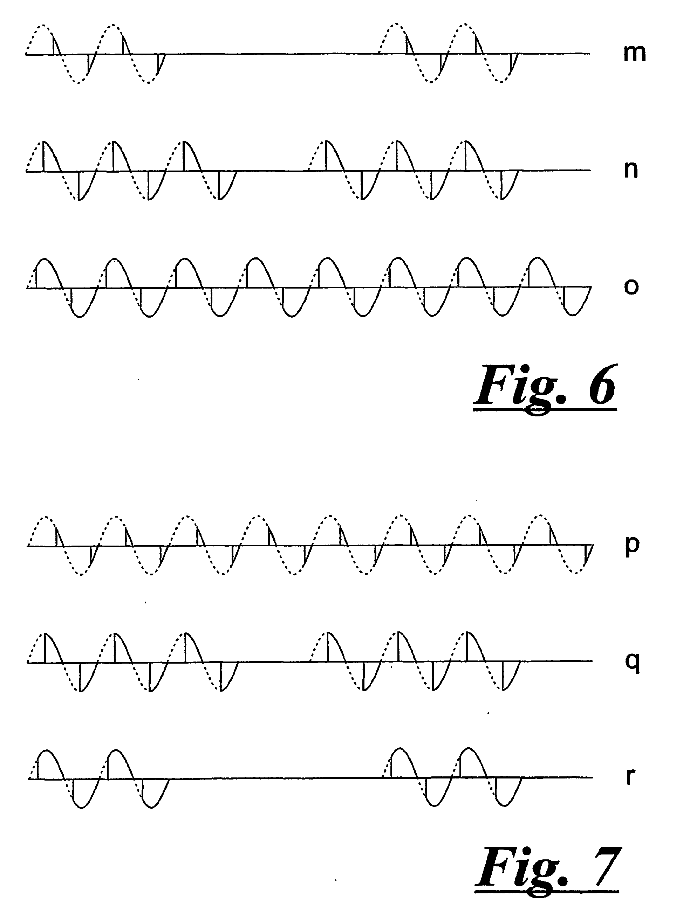

DE 198 51 479 A1 zeigt eine Steuerung für ein Handwerkzeug mit Stromwendermotor und Phasenanschnittsteuerung für den Bohr- und Schraubbetrieb, bei dem in regelmäßig abwechselnden Bereichsabschnitten unterschiedliche Phasenanschnittwinkel eingestellt werden. Bei kleinen Drehzahlen und kleinen Drehmomenten sind die Phasenanschnittwinkel gleich (und maximal) und die Drehzahl stetig. Bei wachsendem Drehmoment wird der Phasenanschnittwinkel der einen Bereichsabschnitte kontinuierlich abgesenkt, während der Phasenwinkel der anderen Bereiche auf einem festen (maximalen) Wert bleibt (Figur 3 mit Beschreibung, Spalte 4, ab Zeile 31). Damit wird ein sanfter Übergang zu einem ruckenden Drehverhalten erreicht (Spalte 3, Zeile 19 bis 31). In Figur 6 sind Bereiche mit sich sägezahnartig ändernden Phasenanschnittwinkeln gezeigt (Spalte 6, ab Seite 59).

Die in der DE 198 51 479 A1 beschriebenen Lösungen haben den Nachteil, daß über dem Bedienungselement (9) des Betriebsschalters (8) des Elektrohandwerkzeugs nicht die rukkende Drehzahl des Universalmotors (1) einschaltbar ist.

Der Erfindung liegt die Aufgabe zugrunde, eine Schaltungsanordnung mit einer Steuerelektronik für ein motorbetriebenes Elektrohandwerkzeug zu schaffen, womit eine ruckende Drehzahl des Motors über das Bedienungselement des Werkzeugschalters einschaltbar ist.

Diese Aufgabe wird durch die Merkmale des Patentanspruchs 1 gelöst. Weitere Ausgestaltungen der Erfindung sind den Unteransprüchen zu entnehmen.

Der Vorteil der erfindungsgemäßen Steuerelektronik liegt darin, daß für die Schaltungsanordnung des Elektrohandwerkzeugs eine Steuerelektronik mit einem entsprechenden Programm gefunden wurde, womit über das Bedienungselement des Werkzeugschalters sowohl variable stetige Drehzahlen als auch variable ruckende Drehzahlen einstellbar sind.
Eine solche Einrichtung kommt vorteilhaft bei handgeführten Schlagbohrmaschinen und Schrauber zur Anwendung.

Die Erfindung wird nachstehend anhand der Zeichnung näher erläutert.

Dabei zeigt:
- Fig. 1: eine Schaltungsanordnung für die Steuereinrichtung des Elektrohandwerkzeugs,
- Fig. 2: Halbwellendarstellungen einer Wechselspannung für den Schlagbohrbetrieb des Elektrohandwerkzeugs,
- Fig. 3: Halbwellendarstellungen einer Wechselspannung für den Schraubbetrieb des Elektrohandwerkzeugs,
- Fig. 4: Darstellungen einer Gleichspannung für den Schlagbohrbetrieb des Elektrohandwerkzeugs,
- Fig. 5: Darstellungen einer Gleichspannung für den Schraubbetrieb des Elektrohandwerkzeugs.
- Fig. 6: weitere Halbwellendarstellungen einer Wechselspannung für den Schlagbohrbetrieb des Elektrohandwerkzeugs,
- Fig. 7: weitere Halbwellendarstellungen einer Wechselspannung für den Schraubbetrieb des Elektrohand-werkzeugs,
- Fig. 8: weitere Darstellungen einer Gleichspannung für den Schlagbohrbetrieb des Elektrohandwerkzeugs,
- Fig. 9: weitere Darstellungen einer Gleichspannung für den Schraubbetrieb des Elektrohandwerkzeugs.

Elektrohandwerkzeuge, insbesondere Bohrmaschinen, Schlagbohrmaschinen und Schrauber, sind mit einer Drehzahlsteuerungselektronik ausgestattet, die vorwiegend über das Bedienungselement des Werkzeugschalters betrieben werden. Ein solcher Werkzeugschalter ist ein sogenannter Gasgeberschalter, womit einerseits das Netz an der Maschine ein- und/oder ausschaltbar ist, und womit andererseits die Drehzahl des Elektrohandwerkzeugs bestimmbar ist.

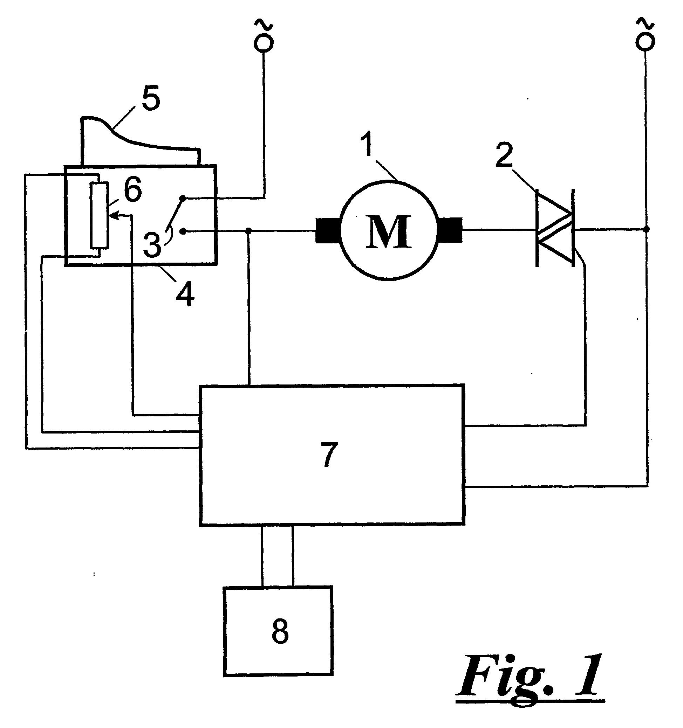

Fig. 1 zeigt eine Schaltungsanordnung mit einer Steuerelektronik, die über dem Werkzeugschalter des Elektrohandwerkzeugs bedient wird. Der Stromwendermotor 1 des Elektrohandwerkzeugs ist über einen Triac 2 oder einen Transistor mit dem einen Netzanschluß und über ein Schaltglied 3 des Werkzeugschalters 4 mit dem anderen Netzanschluß verbunden. Dem Bedienungselement 5 des Werkzeugschalters 4 ist ein Potentiometer 6, zugeordnet. Das Potentiometer 6 wird über das Bedienungselement 5 des Werkzeugschalters 4 betätigt. Die Anschlüsse des Potentiometers 6 führen zu einer Steuerelektronik 7. Die Steuerelektronik 7 beinhaltet für die Drehzahleinstellung des Elektrohandwerkzeugs eine Phasenanschnittsteuerung bei Wechselstrombetrieb oder einen Pulsweitenmodulator bei Gleichstrombetrieb. Der Steuerelektronik 7 ist eine Einrichtung 8 (Schalter/Taster) zur Vorbestimmung der Betriebsart des Stromwendermotors 1 zugeordnet. Mit dieser Einrichtung 8 kann der Benutzer des Elektrohandwerkzeugs zwischen variablen stetigen Drehzahlen und einer in einer Kombination zueinander stehenden stetigen und ruckenden Drehzahl wählen.

Fig. 2 zeigt Halbwellendarstellungen einer Wechselspannung für den Schlagbohrbetrieb mit einem Elektrohandwerkzeug. Das Programm der Steuerelektronik 7 ist für den Schlagbohrbetrieb so ausgelegt, daß am Anfang des Schlagbohrbetriebes bei einem gering durchgezogenen Bedienungselement 5 des Werkzeugschalters 4 bei einer Aufteilung der Halbwellen der Wechselspannung in periodische Bereichsabschnitte 9, mit einem mittleren Phasenanschnittwinkel beginnt und mit einem maximalen Phasenanschnittwinkel endet, so daß der Phasenanschnittwinkel in den Bereichsabschnitten 9 sägezahnartig verläuft, Halbwellendarstellung a, und bei einem höheren durchgezogenen Bedienungselement 5 verringert sich der Phasenanschnittwinkel in den Bereichsabschnitten 9 proportional, Halbwellendarstellung b. Ab einem bestimmten geringeren Phasenanschnittwinkel sind die Bereichsabschnitte 9 aufgehoben, Halbwellendarstellung c. Der Phasenanschnittwinkel wird über das Bedienungselement 5 des Werkzeugschalters 4 in Verbindung mit dem dem Bedienungselement 5 zugeordneten Potentiometer 6 bestimmt. Um ein punktgenaues Anbohren, ohne anzukörnen, auf harte glatte Oberflächen durchführen zu können, wird beim Ansetzen des Steinbohrers das Bedienungselement 5 des Werkzeugschalters 4 lediglich gering durchgezogen, hierdurch wird ein impulsartiges Drehverhalten bei kleiner ruckender Drehzahl mittels eines sägezahnartigen Phasenanschnittwinkels in periodische Bereichsabschnitte 9 erzielt. Mit einem derartigen Drehverhalten des Elektrohandwerkzeugs ist ein punktgenaues Anbohren auf schwierigen Oberflächen von Materialien durchführbar. Im weiteren Verlauf des Bohrvorganges wird das Bedienungselement 5 des Werkzeugschalters 4 weiter durchgezogen, wodurch sich der Phasenanschnittwinkel proportional verringert. Ab einer bestimmten Stellung des Bedienungselements 5 sind keine Bereichsabschnitte mit einem sägezahnartigen Phasenanschnittwinkel mehr vorhanden, und der weitere Schlagbohrvorgang erfolgt mit variablen stetigen Drehzahlen.

Fig. 3 zeigt Halbwellendarstellungen einer Wechselspannung für den Schraubbetrieb mit einem Elektrohandwerkzeug. Das Programm der Steuerelektronik 7 ist für den Schraubbetrieb so ausgelegt, daß der Schraubvorgang bei einem gering durchgezogenen Bedienungselement 5 des Werkzeugschalters 4 mit einem großen Phasenanschnittwinkel beginnt und keine Bereichsabschnitte vorhanden sind, Halbwellendarstellung d, und somit wird zu Beginn des Schraubvorganges das Elektrohandwerkzeug mit variablen stetigen Drehzahlen betrieben. Im weiteren Verlauf des Schraubvorganges erhöht sich das Drehmoment an der Schraube, damit die Drehzahl des Elektrohandwerkzeugs nicht abknickt wird das Bedienungselement 5 des Werkzeugschalters 4 weiter durchgezogen, wodurch sich der Phasenanschnittwinkel verringert, und ab einer bestimmten Verringerung des Phasenanschnittwinkels werden periodische Bereichsabschnitte 9 von Halbwellen der Wechselspannung mit einem sägezahnartigen Phasenanschnittwinkel gebildet, Halbwellendarstellung e. Durch den Beginn der periodischen Bereichsabschnitte 9 beginnt ein impulsartiges leicht ruckendes Drehverhalten des Elektrohandwerkzeugs. Wird das Bedienungselement 5 weiter bis zum Anschlag hin durchgezogen, so nimmt die Steilheit des sägezahnartigen Phasenanschnittwinkels stark zu, und bei einem voll durchgezogenen Bedienungselement 5 weisen die Halbwellen in den Bereichsabschnitten 9 am Anfang einen geringen Phasenanschnittwinkel und am Ende der Bereichsabschnitte 9 einen großen Phasenanschnittwinkel auf, Halbwellendarstellung f, wodurch ein stark ruckendes Drehverhalten bei einem sehr hohen Drehmoment erzielt wird.

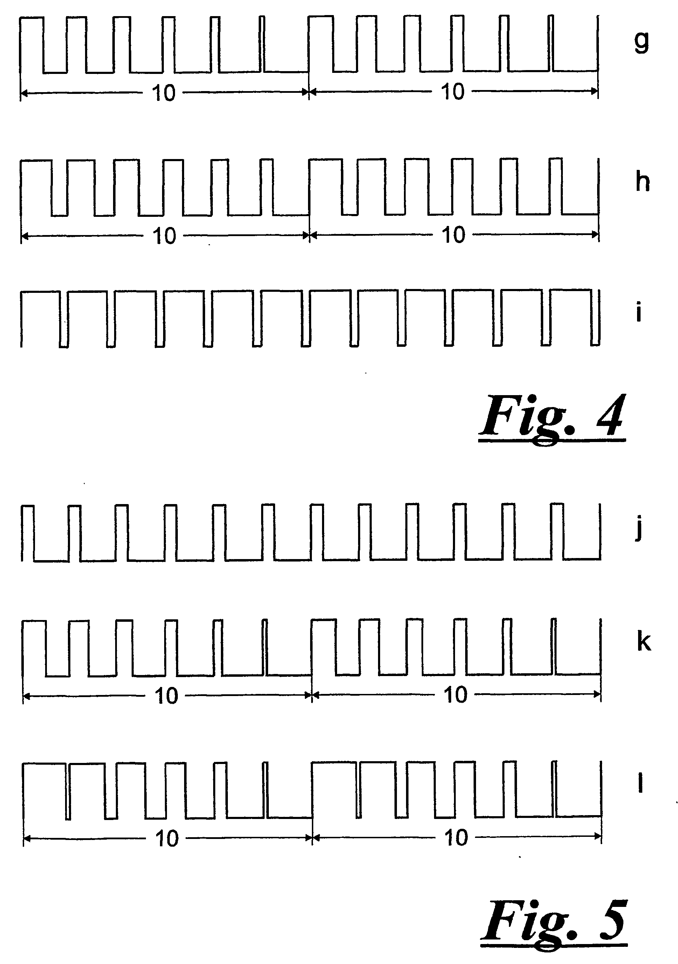

Fig. 4 zeigt Darstellungen einer unterschiedlich pulsweitenmodulierten Gleichspannung für den Schlagbohrbetrieb mit einem Elektrohandwerkzeug.
Das Programm der Steuerelektronik 7 ist für den Schlagbohrbetrieb hier so ausgelegt, daß am Anfang des Schlagbohrbetriebes bei einem gering durchgezogenen Bedienungselement 5 des Werkzeugschalters 4 bei einer Aufteilung einer pulsweitenmodulierten Gleichspannung in periodische Bereichsabschnitte 10, der Ausschnitt der pulsweitenmodulierten Gleichspannung in den Bereichsabschnitten 10 mit einem mittleren Ausschnitt beginnt und aufwärts bis zum maximalen Ausschnitt endet, so daß der Ausschnitt der pulsweitenmodulierten Gleichspannung in den Bereichsabschnitten 10 sägezahnartig verläuft, Gleichspannungs-Darstellung g, und bei einem höheren durchgezogenen Bedienungselement 5 verkleinern sich die Ausschnitte der pulsweitenmodulierten Gleichspannung in den Bereichsabschnitten 10 proportional, Gleichspannungs-Darstellung h. Ab einer bestimmten Verkleinerung der Ausschnitte der pulsweitenmodulierten Gleichspannung sind die Bereichsabschnitte 10 aufgehoben, Gleichspannungs-Darstellung i. Die Ausschnitte der pulsweitenmodulierten Gleichspannung werden auch hier über das Bedienungselement 5 des Werkzeugschalters 4 in Verbindung mit dem dem Bedienungselement 5 zugeordneten Potentiometer 6 bestimmt.
Die Anwendung und Wirkungsweise des gleichstrombetriebenen Elektrohandwerkzeugs für den Schlagbohrbetrieb entspricht die der zuvor beschriebenen Wechselstromversion.

Fig. 5 zeigt Darstellungen einer unterschiedlich pulsweitenmodulierten Gleichspannung für den Schraubbetrieb mit einem Elektrohandwerkzeug.
Das Programm der Steuerelektronik 7 ist für den Schraubbetrieb hier so ausgelegt, daß am Anfang des Schraubvorganges bei einem gering durchgezogenen Bedienungselement 5 des Werkzeugschalters 4 große Ausschnitte der pulsweitenmodulierten Gleichspannung vorliegen und keine Bereichsabschnitte vorhanden sind, und bei einem höheren durchgezogenen Bedienungselement 5 bilden sich periodisch wiederholende Bereichsabschnitte 10 der pulsweitenmodulierten Gleichspannung, wobei die Ausschnitte der pulsweitenmodulierten Gleichspannung in den Bereichsabschnitten 10 sägezahnartig erfolgt, indem am Anfang der Bereichsabschnitte 10 mittlere Ausschnitte und am Ende der Bereichsabschnitte 10 maximale Ausschnitte vorhanden sind, Gleichspannungs-Darstellung k. Wird das Bedienungselement 5 weiter bis zum Anschlag hin durchgezogen, so weist die pulsweitenmodulierte Gleichspannung am Anfang der Bereichsabschnitte 10 geringe Ausschnitte und am Ende der Bereichsabschnitte 10 maximale Ausschnitte auf, Gleichspannungs-Darstellung 1.
Die Anwendung und Wirkungsweise des gleichstrombetriebenen Elektrohandwerkzeugs für den Schraubbetrieb entspricht die der zuvor beschriebenen Wechselstromversion.

Fig. 6 zeigt weitere Halbwellendarstellungen einer Wechselspannung für den Schlagbohrbetrieb mit einem Elektrohandwerkzeug. Das Programm der Steuerelektronik 7 ist hier für den Schlagbohrbetrieb so ausgelegt, daß am Anfang des Schlagbohrbetriebes bei einem gering durchgezogenen Bedienungselement 5 des Werkzeugschalters 4 der Phasenanschnittwinkel groß ist und große sich periodisch wiederholende Halbwellenlücken vorhanden sind, Halbwellendarstellung m, und bei einem höheren durchgezogenen Bedienungselement 5 verringert sich der Phasenanschnittwinkel, wobei die Weite der Halbwellenlücken sich proportional zur Verringerung des Phasenanschnittwinkels verkleinern, Halbwellendarstellung n. Ab einem bestimmten geringeren Phasenanschnittwinkel ist die Ausblendung von Halbwellen aufgehoben, Halbwellendarstellung o. Der Phasenanschnittwinkel wird über das Bedienungselement 5 des Werkzeugschalters 4 in Verbindung mit dem dem Bedienungselement 5 zugeordneten Potentiometer 6 bestimmt.
Die Anwendung und Wirkungsweise des wechselstrombetriebenen Elektrohandwerkzeugs für den Schlagbohrbetrieb entspricht die wie sie nach der Fig. 2 beschrieben ist.

Fig. 7 zeigt weitere Halbwellendarstellungen einer Wechselspannung für den Schraubbetrieb mit einem Elektrohandwerkzeug. Das Programm der Steuerelektronik 7 ist für den Schraubbetrieb so ausgelegt, daß am Anfang des Schraubvorganges bei einem gering durchgezogenen Bedienungselement 5 des Werkzeugschalters 4 der Phasenanschnittwinkel groß ist und keine Halbwellenlücken vorhanden sind, Halbwellendarstellung p, und somit wird zu Beginn des Schraubvorganges das Elektrohandwerkzeug mit variablen stetigen Drehzahlen betrieben. Im weiteren Verlauf des Schraubvorganges erhöht sich das Drehmoment an der Schraube, damit die Drehzahl des Elektrohandwerkzeugs nicht abknickt wird das Bedienungselement 5 des Werkzeugschalters 4 weiter durchgezogen, wodurch sich der Phasenanschnittwinkel verringert, und ab einer bestimmten Verringerung des Phasenanschnittwinkels wird eine Anzahl von Halbwellen periodisch ausgeblendet, Halbwellendarstellung q. Durch den Beginn einer geringen Anzahl von periodisch ausgeblendeten Halbwellen beginnt ein impulsartiges leicht ruckendes Drehverhalten des Elektrohandwerkzeugs. Wird das Bedienungselement 5 weiter bis zum Anschlag hin durchgezogen, so nimmt die Anzahl der periodisch ausgeblendeten Halbwellen proportional zu der Abnahme des Phasenanschnittwinkels zu. Bei voll durchgezogenem Bedienungselement 5 wird die größte Anzahl von Halbwellen periodisch ausgeblendet, Halbwellendarstellung r, wodurch ein stark ruckendes Drehverhalten bei einem sehr hohen Drehmoment erzielt wird.

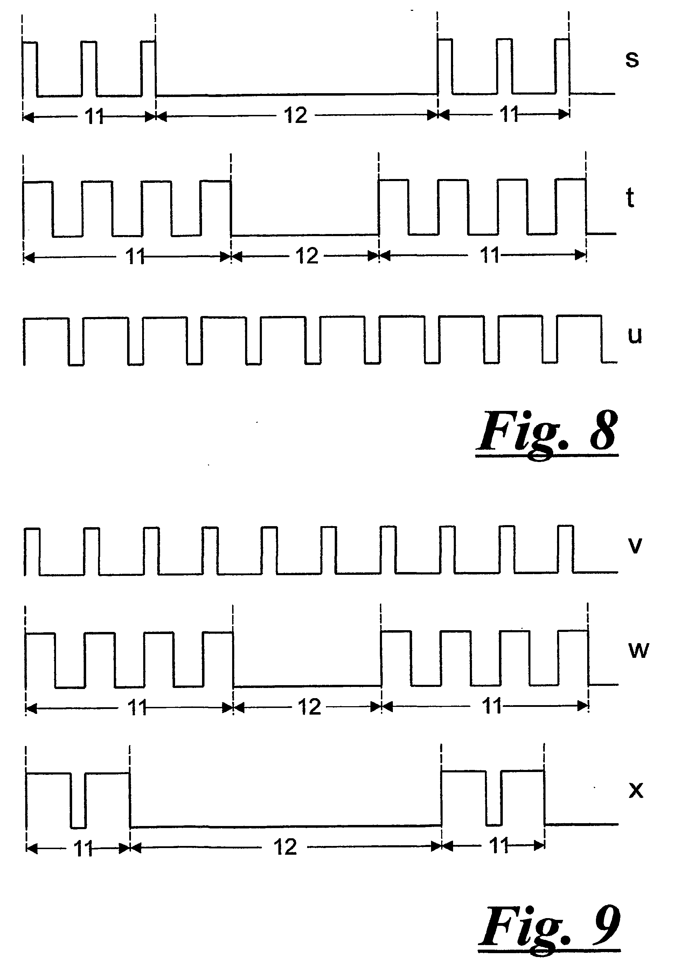

Fig. 8 zeigt weitere Darstellungen einer unterschiedlich pulsweitenmodulierten Gleichspannung für den Schlagbohrbetrieb mit einem Elektrohandwerkzeug.
Das Programm der Steuerelektronik 7 ist für den Schlagbohrbetrieb hier so ausgelegt, daß am Anfang des Schlagbohrbetriebes bei einem gering durchgezogenen Bedienungselement 5 des Werkzeugschalters 4 große Ausschnitte der pulsweitenmodulierten Gleichspannung in ersten Bereichsabschnitten 11 vorhanden sind, und die Ausblendung von Gleichspannung in periodisch sich wiederholende zweite Bereichsabschnitte 12 mit einer großen Weite beginnt, Gleichspannungs-Darstellung s, und bei einem höheren durchgezogenen Bedienungselement 5 verkleinern sich die Ausschnitte der pulsweitenmodulierten Gleichspannung in den ersten Bereichsabschnitten 11, wobei die Weite der Ausblendung von Gleichspannung in den zweiten Bereichsabschnitten 12 sich proportional zu der Verkleinerung der Ausschnitte der pulsweitenmodulierten Gleichspannung in den ersten Bereichsabschnitten 11 verringert, Gleichspannungs-Darstellung t. Ab einer bestimmten Verkleinerung der Ausschnitte der pulsweitenmodulierten Gleichspannung in den ersten Bereichsabschnitten 11 ist die Ausblendung von Gleichspannung in den zweiten Bereichsabschnitten 12 aufgehoben, Gleichspannungs-Darstellung u. Die Ausschnitte und die Ausblendung von Gleichspannung wird auch hier über das Bedienungselement 5 des Werkzeugschalters 4 in Verbindung mit dem dem Bedienungselement 5 zugeordneten Potentiometer 6 bestimmt.
Die Anwendung und Wirkungsweise des gleichstrombetriebenen Elektrohandwerkzeugs für den Schlagbohrbetrieb entspricht die der zuvor beschriebenen Wechselstromversion.

Fig. 9 zeigt weitere Darstellungen einer unterschiedlich pulsweitenmodulierten Gleichspannung für den Schraubbetrieb mit einem Elektrohandwerkzeug.
Das Programm der Steuerelektronik 7 ist für den Schraubbetrieb hier so ausgelegt, daß am Anfang des Schraubvorganges bei einem gering durchgezogenen Bedienungselement 5 des Werkzeugschalters 4 große Ausschnitte der pulsweitenmodulierten Gleichspannung vorhanden sind, Gleichspannungs-Darstellung v, und bei einem höheren durchgezogenen Bedienungselement 5 bilden sich periodisch wiederholende erste und zweite Bereichsabschnitte 11;12 aus der pulsweitenmodulierten Gleichspannung, wobei in den ersten Bereichsabschnitten 11 die Ausschnitte der pulsweitenmodulierten Gleichspannung verkleinert sind, und in den zweiten Bereichsabschnitten 12 Gleichspannung ausgeblendet wird, Gleichspannungs-Darstellung w. Die Zunahme der Weite der Ausblendung von Gleichspannung in den zweiten Bereichsabschnitten 12 ist proportional mit der Verkleinerung der Ausschnitte der pulsweitenmodulierten Gleichspannung in den ersten Bereichsabschnitten 11 gekoppelt. Ab einer bestimmten Verkleinerung der Ausschnitte der pulsweitenmodulierten Gleichspannung in den ersten Bereichsabschnitten 11 ist die Weite der Ausblendung von Gleichspannung in den zweiten Bereichsabschnitten 12 am größten, Gleichspannungs-Darstellung x.
Die Anwendung und Wirkungsweise des gleichstrombetriebenen Elektrohandwerkzeugs für den Schraubbetrieb entspricht die der zuvor beschriebenen Wechselstromversion.

## Patentansprüche

1. Steuerelektronik für ein Elektrohandwerkzeug mit einem Stromwendermotor (1), die eine Phasenanschnittsteuerung für Wechselstrombetrieb bzw. einen Pulsweitenmodulator für Gleichstrombetrieb beinhaltet, wobei die Steuerelektronik (7) über das Bedienungselement (5) des Werkzeugschalters (4) bedienbar ist, und wobei ein Programm für die Steuerelektronik für den Schraub- und Bohrbetrieb entweder einen konstanten Phasenanschnittwinkel bzw. ein konstantes Puls-Pausen-Verhältnis für stetige Drehzahlen oder einen sägezahnartig verlaufenden Phasenanschnittwinkel bzw. Puls-Pausen-Verhältnis oder periodische Halbwellenlücken bzw. Gleichspannungslücken für ruckendes Drehverhalten einstellt,
**dadurch gekennzeichnet, daß** das Programm der Steuerelektronik (7) für den Schlagbohrbetrieb des Elektrohandwerkzeugs so ausgelegt ist, daß bei einem gering durchgezogenen Bedienungselement (5) des Werkzeugschalters (4)der Phasenanschnittwinkel bzw. das Puls-Pausen-Verhältnis in den Bereichsabschnitten (9;10) sägezahnartig verläuft, und bei einem weiter durchgezogenen Bedienungselement (5) der Phasenanschnittwinkel in den Bereichsabschnitten (9;10) proportional verringert bzw. das Puls-Pausen-Verhältnis proportional vergrößert ist, und bei einem weiter durchgezogenen Bedienungselement ab einer bestimmten Stellung die Bereichsabschnitte (9;10) aufgehoben sind,
daß das Programm der Steuerelektronik (7) für den Schraubbetrieb des Elektrohandwerkzeugs so ausgelegt ist, daß bei einem gering durchgezogenen Bedienungselement (5) des Werkzeugschalters (4) keine Bereichsabschnitte vorhanden sind, und bei einem weiter durchgezogenen Bedienungselement (5) ab einer bestimmten Stellung der Phasenanschnittwinkel bzw. das Puls-Pausen-Verhältnis in den Bereichsabschnitten (9;10) sägzahnartig verläuft, und der Phasenanschnittwinkel in den Bereichsabschnitten mit dem weiter durchgezogenen Bedienungselement (5) proportional am Anfang der Bereichsabschnitte (9) verringert und am Ende der Bereichsabschnitte (9) vergrößert bzw. das Puls-Pausen-Verhältnis proportional am Anfang der Bereichsabschnitte (10) vergrößert und am Ende der Bereichsabschnitte (10) verringert ist.

2. Steuerelektronik nach Anspruch 1,
**dadurch gekennzeichnet, daß** das Programm der Steuerelektronik (7) für den Schlagbohrbetrieb des Elektrohandwerkzeugs so ausgelegt ist, daß bei einem gering durchgezogenen Bedienungselement (5) der Phasenanschnittwinkel bzw. das Puls-Pausen-Verhältnis groß ist und große periodische Halbwellenlücken bzw. Gleichspannungslücken (12) vorhanden sind, und bei einem weiter durchgezogenen Bedienungselement (5) der Phasenanschnittwinkel bzw. das Puls-Pausen-Verhältnis verringert ist, wobei die Weite der Halbwellenlücken bzw. die Weite der Gleichspannungslücken (12) proportional zum verringerten Phasenanschnittwinkel bzw. Puls-Pausen-Verhältnis abnimmt, und ab einem bestimmten kleinen Phasenanschnittwinkel bzw. Puls-Pausen-Verhältnis die Halbwellenlücken bzw. Gleichspannungslücken (12) aufgehoben sind.

3. Steuerelektronik nach Anspruch 1,
**dadurch gekennzeichnet, daß** das Programm der Steuerelektronik (7) für den Schlagbohrbetrieb des Elektrohandwerkzeugs so ausgelegt ist, daß bei einem gering durchgezogenen Bedienungselement (5) der Phasenanschnittwinkel bzw. das Puls-Pausen-Verhältnis groß ist und keine Halbwellenlücken bzw. Gleichspannungslücken (12) vorhanden sind und bei einem weiter durchgezogenen Bedienungselement (5) der Phasenanschnittwinkel bzw. das Puls-Pausen-Verhältnis verringert ist, wobei ab einer bestimmten Verringerung des Phasenanschnittwinkels bzw. des Puls-Pausen-Verhältnisses eine Anzahl von Halbwellen bzw. Gleichspannung periodisch ausgeblendet sind/ist, und die Anzahl der periodisch ausgeblendeten Halbwellen bzw. die Weite der ausgeblendeten Gleichspannung (Gleichspannungslücken 12) nimmt proportional in Bezug zur Verringerung des Phasenanschnittwinkels bzw. Puls-Pausen-Verhältnisses zu, und bei einem voll durchgezogenen Bedienungselement (5) ist die größte Anzahl von Halbwellen bzw. die größte Weite von Gleichspannung periodisch ausgeblendet.

4. Steuerelektronik nach Anspruch 1,
**dadurch gekennzeichnet, daß** das Programm der Steuerelektronik (7) für den Schlagbohrbetrieb des Elektrohandwerkzeugs so ausgelegt ist, daß bei einem gering durchgezogenen Bedienungselement (5) der Phasenanschnittwinkel bzw. das Puls-Pausen-Verhältnis in den Bereichsabschnitten (9;10) mit einem mittleren Wert beginnt und der Phasenanschnittwinkel mit einem maximalen Wert bzw. das Puls- Pausen-Verhältnis mit einem minimalen Wert endet.

5. Steuerelektronik nach Anspruch 1,
**dadurch gekennzeichnet, daß** das Programm der Steuerelektronik (7) für den Schraubbetrieb des Elektrohandwerkzeugs so ausgelegt ist, daß bei einem voll durchgezogenen Bedienungselement (5) der Phasenanschnittwinkel mit einem geringen Wert bzw. das Puls- Pausen-Verhältnis in den Bereichsabschnitten (9;10) mit einem hohen Wert beginnt und der Phasenanschnittwinkel mit einem hohen Wert bzw, das Puls-Pausen-Verhältnis mit einem geringen Wert endet.

6. Steuerelektronik nach Anspruch 1 - 5,
**dadurch gekennzeichnet, daß** während des Schlagbohrbetriebes am Anfang ein impulsartiges Drehverhalten bei kleiner rukkender Drehzahl mittels einer periodischen Ausblendung einer Anzahl von Halbwellen oder Ausblendung von Gleichspannung erzielt wird, und ab einer bestimmten Stellung des Bedienungselements (5) des Werkzeugschalters (4) der weitere Schlagbohrbetrieb mit variablen stetigen Drehzahlen erfolgt, und daß während des Schraubbetriebes am Anfang variable stetige Drehzahlen vorhanden sind, und ab einer bestimmten Stellung des Bedienungselements (5) der weitere Schraubvorgang mit einem impulsartigen leicht ruckendem Drehverhalten des Elektrohandwerkzeugs beginnt und bei voll durchgezogenen Bedienungselement (5) des Werkzeugschalters (4) ein stark ruckendes Drehverhalten bei einem sehr hohen Drehmoment vorhanden ist.

7. Steuerelektronik nach Anspruch 1 - 6,
**dadurch gekennzeichnet, daß** der Steuerelektronik (7) eine Einrichtung (8) (Schalter/Taster) zur Vorbestimmung der Betriebsart des Stromwendermotors (1) zugeordnet ist, womit zwischen der Betriebsart einer variablen stetigen Drehzahl und einer in einer Kombination zueinander stehenden stetigen und ruckenden Drehzahl gewählt werden kann.

8. Steuerelektronik nach einem der Ansprüche 1 - 7,
**dadurch gekennzeichnet, daß** die Phasenanschnittsteuerung einen Triac enthält.

9. Steuerelektronik nach einem der Ansprüche 1 - 8,
**dadurch gekennzeichnet, daß** der Pulsweitenmodulator einen Transistor enthält.

10. Steuerelektronik nach einem der Ansprüche 1 - 9,
**dadurch gekennzeichnet, daß** das Bedienungselement (5) ein Potentiometer enthält.

## Claims

1. Electronic controller for an electric hand tool with a commutator motor (1) which contains a phase-cutting control for alternating current operation and a pulse width modulator for direct current operation respectively, wherein the electronic controller (7) can be operated through the operating element (5) of the tool switch, and wherein a program for the electronic controller for the screwing and boring operation sets either a constant phase cutting angle or constant pulse pause ratio for constant speeds or a saw-tooth type phase cutting angle or pulse pause ratio or periodic half wave gaps or direct current voltage gaps for a jerky speed mode
**characterised in that** the program of the electronic controller (7) for percussion drilling operation by the electric hand tool is designed so that when the operating element (5) of the tool switch (4) is pulled slightly the phase cutting angle or the pulse pause ratio runs in saw-tooth manner in the area sections (9;10), and when the operating element (5) is pulled through further the phase cutting angle in the area sections (9;10) is proportionally reduced and the pulse pause ratio is proportionally increased respectively, and when the operating element is pulled further through from a specific position the area sections (9,10) are lifted,
that the program of the electronic controller (7) for the screwing operation by the electric hand tool is designed so that when the operating element (5) of the tool switch (4) is pulled slightly through no area sections are provided and when the operating element (5) is pulled through further from a certain position the phase cutting angle and the pulse pause ratio respectively in the area sections (9;10) run in saw-tooth manner, and the phase cutting angle in the area sections with the operating element (5) pulled through further is reduced proportionally at the beginning of the area sections (9) and increased at the end of the area sections (9) and respectively the pulse pause ratio is increased proportionally at the start of the area sections (10) and reduced at the end of the area sections (10).

2. Electronic controller according to claim 1,
**characterised in that** the program of the electronic controller (7) for the percussion drilling operation by the electric hand tool is designed so that when the operating element (5) is pulled through slightly the phase cutting angle and the pulse pause ratio respectively is large and large periodic half wave gaps or direct current voltage gaps (12) are provided, and when the operating element (5) is pulled through further the phase cutting angle and the pulse pause ratio respectively is reduced, wherein the width of the half wave gaps or the width of the direct current voltage gaps (12) respectively decreases proportionally to the reduced phase cutting angle and pulse pause ratio respectively, and from a certain small phase cutting angle or pulse pause ratio the half wave gaps or direct current voltage gaps (12) are lifted.

3. Electronic controller according to claim 1,
**characterised in that** the program of the electronic controller (7) for the percussion drilling operation by the electric hand tool is designed so that when the operating element (5) is pulled through slightly the phase cutting angle and the pulse pause ratio respectively is large and no half wave gaps or direct current voltage gaps (12) respectively are present, and when the operating element (5) is pulled through further the phase cutting angle and the pulse pause ratio respectively are reduced wherein from a certain reduction of the phase cutting angle or pulse pause ratio respectively a number of half waves or direct voltage is/are periodically faded out and the number of the periodically faded-out half waves and the width of the faded-out direct current voltage (direct current voltage gaps 12) respectively increases proportionally in relation to the reduction of the phase cutting angle or pulse pause ratio, and when the operating element (5) is pulled through completely the greatest number of half waves or the greatest width of direct current voltage respectively is periodically faded out.

4. Electronic controller according to claim 1,
**characterised in that** the program of the electronic controller (7) for the percussion drilling operation by the electric hand tool is designed so that when the operating element (5) is pulled through slightly the phase cutting angle and the pulse pause ratio respectively in the area sections (9;10) start with a mean value and the phase cutting angle ends with a maximum value and the pulse pause ratio ends with a minimum value respectively.

5. Electronic controller according to claim 1,
**characterised in that** the program of the electronic controller (7) for the screwing operation by the electric hand tool is designed so that when the operating element (5) is pulled through completely the phase cutting angle starts with a low value and the pulse pause ratio in the area sections (9;10) starts with a high value, respectively, and the phase cutting angle ends with a high value and the pulse pause ratio ends with a low value respectively.

6. Electronic controller according to claims 1 - 5,
**characterised in that** during the percussion drilling operation at the beginning an impulse-type rotary mode with slight jerking speed is obtained by means of a periodic fading out of a number of half waves or fading out of direct current voltage, and from a certain position of the operating element (5) of the tool switch (4) the further percussion drilling operation takes place with variable constant speeds, and that during the screwing operation at the start variable constant speeds are provided, and from a certain position of the operating element (5) the further screwing process starts with an impulse-type slightly jerky rotary behaviour of the electric hand tool and when the operating element (5) of the tool switch (4) is pulled through completely a severely jerky rotary behaviour is provided at a very high torque.

7. Electronic controller according to claim 1 - 6,
**characterised in that** the electronic controller (7) is assigned a device (8) (switch/push-button) for predetermining the type of operation of the commutator motor (1), with which it is possible to choose between the operating mode with variable steady speed or operating mode with combination of constant and jerking speed.

8. Electronic controller according to one of claims 1 - 7,
**characterised in that** the phase cutting control contains a triac.

9. Electronic controller according to one of claims 1 - 8,
**characterised in that** the pulse width modulator contains a transistor.

10. Electronic controller according to one of claims 1 - 9,
**characterised in that** the operating element (5) contains a potentiometer.

## Revendications

1. Système électronique de commande pour un outil électrique à main, avec un moteur à commutateur (1), qui comprend une commande de coupe d'angle de phase pour une exploitation en courant alternatif, respectivement un modulateur d'impulsions en largeur pour exploitation en continu, le système électronique de commande (7) pouvant être actionné par l'intermédiaire d'un élément d'actionnement (5) du commutateur (4), et un programme pour le système électronique de commande commandant, pour le fonctionnement en vissage et en forage, soit un angle de coupe de phase constant, respectivement un rapport impulsion-intervalle constant pour une vitesse de rotation constante, soit un angle de coupe de phase ou un rapport impulsion-intervalle évoluant à la manière de dents de scie ou des intervalles de demi-ondes ou des intervalles de tension continue périodiques pour un comportement en rotation saccadé,
**caractérisé en ce que**
le programme du système électronique de commande (7) pour le fonctionnement en forage par percussion de l'outil électrique à main est conçu de sorte que, lorsque l'élément d'actionnement (5) du commutateur d'outil (4) est légèrement tiré, l'angle de coupe de phase, respectivement le rapport impulsion-intervalle évolue à la manière de dents de scies dans les sections régionales (9; 10), et, lorsque l'élément d'actionnement (5) est tiré d'avantage, l'angle de coupe de phase est réduit proportionnellement, respectivement le rapport impulsion-intervalle est augmenté proportionnellement dans lesdites sections (9; 10), et, lorsque l'élément d'actionnement est encore tiré d'avantage, les sections (9; 10) sont annulées à partir d'une certaine position,
**en ce que** le programme du système électronique de commande (7) est conçu, pour le fonctionnement en vissage de l'outil électrique à main de sorte que, lorsque l'élément d'actionnement (5) du commutateur d'outil (4) est légèrement tiré, il n'existe pas de sections, et que, lorsque l'élément d'actionnement (5) est d'avantage tiré, l'angle de coupe de phase ou respectivement le rapport impulsion-intervalle évolue, à partir d'une certaine position, à la manière de dents de scie dans les sections (9; 10), et que, dans les sections, l'angle de coupe de phase, avec l'élément d'actionnement (5) d'avantage tiré, est réduit proportionnellement, au début des sections (9) et augmente à la fin des sections (9), respectivement le rapport impulsion-intervalle augmente proportionnellement, au début des sections (10) et diminue à la fin des sections (10).

2. Système électronique de commande selon la revendication 1,
**caractérisé en ce que**
le programme du système électronique de commande (7) est conçu, pour le fonctionnement en forage par percussion de l'outil électrique à main, de sorte que, lorsque l'élément d'actionnement (5) est légèrement tiré, l'angle de coupe de phase, respectivement le rapport impulsion-intervalle est important et qu'il existe de grands intervalles de demi-ondes, respectivement de tension continue (12) périodiques, et que, lorsque l'élément d'actionnement (5) est d'avantage tiré, l'angle de coupe de phase, respectivement le rapport impulsion-intervalle est réduite, la largeur des intervalles de demi-ondes, respectivement la largeur des intervalles de tension continue (12) diminue proportionnellement en fonction de l'angle de coupe de phase, respectivement du rapport impulsion-intervalle réduit, et qu'à partir d'un certain angle de coupe de phase ou, respectivement, d'un certain rapport impulsion-intervalle de petite taille, les intervalles de demi-ondes, respectivement les intervalles de tension continue (12) sont annulés.

3. Système électronique de commande selon la revendication 1,
**caractérisé en ce que**
le programme du système électronique de commande (7) est conçu, pour le fonctionnement en forage par percussion de l'outil électrique à main, de sorte que, lorsque l'élément d'actionnement (5) est légèrement tiré, l'angle de coupe de phase, respectivement le rapport impulsion-intervalle est important, et qu'il n'existe aucuns intervalles de demi-ondes, respectivement de tension continue (12), et que, lorsque l'élément d'actionnement (5) est d'avantage tiré, l'angle de coupe de phase, respectivement le rapport impulsion-intervalle est réduit, plusieurs demi-ondes, respectivement une tension continue étant annulée/s périodiquement à partir d'une certaine réduction de l'angle de coupe de phase, respectivement du rapport impulsion-intervalle, et le nombre des demi-ondes, respectivement la largeur de la tension continue annulée (intervalles de tension continue) (12) augmentant proportionnellement par rapport à la réduction de l'angle de coupe de phase ou, respectivement, du rapport impulsion-intervalle, et que, lorsque l'élément d'actionnement (5) est complètement tiré, le plus grand nombre de demi-ondes respectivement la plus grande largeur de tension continue est périodiquement annulée.

4. Système électronique de commande selon la revendication 1,
**caractérisé en ce que**
le programme du système électronique de commande (7) est conçu, pour le fonctionnement en forage par percussion de l'outil électrique à main, de sorte que, lorsque l'élément d'actionnement (5) est légèrement tiré, l'angle de coupe de phase, respectivement le rapport impulsion-intervalle commence dans les sections (9; 10) avec une valeur moyenne, et que l'angle de coupe de phase finit avec une valeur maximale, respectivement le rapport impulsion-intervalle finit avec une valeur minimale.

5. Système électronique de commande selon la revendication 1,
**caractérisé en ce que**
le programme du système électronique de commande (7) est conçu, pour le fonctionnement en vissage de l'outil électrique à main, de sorte que, lorsque l'élément d'actionnement (5) est complètement tiré, l'angle de coupe de phase, commence avec une faible valeur, respectivement le rapport impulsion-intervalle commence avec une valeur élevée, dans les sections (9; 10), et que l'angle de phase finit avec une valeur élevée, respectivement le rapport impulsion-intervalle finit avec une faible valeur.

6. Système électronique de commande selon revendication 1 - 5,
**caractérisé en ce que**,
lors du fonctionnement en forage pa percussion, on obtient, au début, un comportement en rotation pulsé, à une petite vitesse saccadée, au moyen d'une annulation périodique d'un nombre de demi-ondes ou d'une annulation de la tension continue, et qu'à partir d'une certaine position de l'élément d'actionnement (5) du commutateur d'outil (4), le fonctionnement en forage par percussion ultérieur est effectué à des vitesses de rotation continues, variables, et que, lors du fonctionnement en vissage, des vitesses de rotation continues, variables sont présentes au début, et à partir d'une certaine position de l'élément d'actionnement (5), le fonctionnement en vissage ultérieur commence avec un comportement en rotation pulsé, légèrement saccadé de l'outil électrique à main, et que, lorsque l'élément d'actionnement (5) du commutateur d'outil (4) est complètement tiré, le comportement en rotation est fortement saccadé, avec un couple de rotation très élevé.

7. Système électronique de commande selon revendication 1 - 6,
**caractérisé en ce que**,
au système électronique de commande (7) est associée un dispositif (8) (commutateur / bouton-poussoir) pour la prédétermination du mode de service du moteur à commutateur (1), ce qui permet de choisir entre un mode d'exploitation à une vitesse de rotation continue, variable, et à une vitesse de rotation continue et saccadée combinée.

8. Système électronique de commande selon l'une des revendications 1 - 7,
**caractérisé en ce que**
la commande de coupe de phase comprend un triac.

9. Système électronique de commande selon l'une des revendications 1 - 8,
**caractérisé en ce que**
le modulateur d'impulsions en largeur comprend un transistor.

10. Système électronique de commande selon l'une des revendications 1 - 9,
**caractérisé en ce que**
l'élément d'actionnement (5) comprend un potentiomètre.
